# EUROPÄISCHE PATENTSCHRIFT

(11) **EP 0 891 509 B1**
(45) Veröffentlichungstag und Bekanntmachung des Hinweises auf die Patenterteilung: **22.09.1999**
(21) Anmeldenummer: 97920745.3
(22) Anmeldetag: 24.04.1997
(51) Int. Cl.: F16L 47/00, F16L 47/02, B29C 65/34

(54) **ANSCHWEISSBARE SCHELLE FÜR EIN AUS THERMISCH SCHWEISSFÄHIGEM MATERIAL BESTEHENDES LEITUNGSROHR**
WELDABLE CLAMP FOR A PIPE MADE OF A THERMALLY WELDABLE MATERIAL
BRIDE SOUDABLE POUR TUBE DE CONDUITE REALISE DANS UN MATERIAU THERMOSOUDABLE

(30) Priorität: 12.06.1996 DE 19623353
(43) Veröffentlichungstag der Anmeldung: 20.01.1999
(73) Patentinhaber: MANIBS Spezialarmaturen GmbH & Co. KG, D-42859 Remscheid (DE)
(72) Erfinder: SCHAFSTEIN, Jürgen, D-42859 Remscheid (DE)
(74) Vertreter: Mentzel, Norbert, Dipl.-Phys.
(86) Internationale Anmeldenummer: EP9702080
(87) Internationale Veröffentlichungsnummer: WO9747912

(56) Entgegenhaltungen:
- DE-U- 29 512 309
- US-A- 2 690 193
- US-A- 4 365 144

## Beschreibung

Die Erfindung richtet sich auf eine Schelle der im Oberbegriff des Anspruches 1 angegebenen Art. Man verwendet derartige Schellen, um z. B. nachträglich an einem bereits verlegten, unter Mediendruck stehenden Leitungsrohr eine Abzweigleitung anzuschließen. Dazu verwendet man Schellen, die mindestens an einem ihrer um das Leitungsrohr herumgelegten zylinderförmigen Segmente einen Rohrabgang aufweisen. Dieser Rohrabgang dient zunächst zum Anbohren des Leitungsrohres, dann aber auch zur Medienführung an die an den Rohrabgang angeschlossene Abzweigleitung. In anderen Fällen, wo ein Leitungsrohr eine defekte Stelle aufweist, wird, zwecks Reparatur, eine Schelle aus Segmenten ohne Rohrabgang um das Leitungsrohr herumgelegt.

Bei der bekannten Schelle der im Oberbegriff von Anspruch 1 genannten Art (DE 295 12 309 U1) werden zwei Segmente um das Leitungsrohr herumgelegt, von denen das eine Segment zweischenkelig ausgebildet ist. Die beiden Schenkel gehen über die ganze Axiallänge der Schelle an den Begrenzungskanten unterbrechungsfrei durch und bilden dort zwei keilförmige, gegeneinander gekrümmte Ansätze, welche die zur Befestigung aneinander dienenden Begrenzungskanten dieses Segments in Richtung auf das andere Segment überragen. Im Gebrauchsfall kommen diese durchgehenden Ansätze im Zwickel zwischen der Innenfläche des benachbarten Segments und dem Leitungsrohr zu liegen. Um hier eine ausreichende Mediendichtigkeit an der Schweißstelle zu erhalten, werden hier bereichsweise zwei Lagen von Heizmatten verwendet, nämlich eine erste Heizmatte an der Innenfläche der Ansätze und eine zweite Heizmatte im Zwickel an der Innenfläche des benachbarten Segments. Dies erfordert einen hohen Bauaufwand und, wegen der doppellagigen Schweißung, eine höhere Heizenergie.

Zur Verbindung einer schrumpfbarem Muffe zwischen den beiden Mantelrohren einer Rohrverbindung legt man eine bandförmige Heizmatte in den Spaltbereich zwischen dem Mantelrohr einerseits und der darüberschiebbaren Muffe andererseits (DE 37 20 577 A1), wo die Stoßenden am Bandende der Heizmatte stufenförmig zueinander versetzt sind und im Gebrauchsfall kammartig ineinandergreifen. Die Heizmatte ist ein separater Bauteil, der als loses Band ringförmig um das Mantelrohr gelegt wird und eine doppellagige Schweißverbindung erzeugt, nämlich einmal mit der Umfangsfläche des Mantelrohres und ferner mit der Innenfläche der aufgeschrumpften Muffe. Dichtungsprobleme einer aus mindestens zwei zylindrischen Segmenten zusammengesetzten Schelle treten hier nicht auf.

Der Erfindung liegt die Aufgabe zugrunde, eine Schelle der im Oberbegriff des Anspruches 1 genannten Art zu entwickeln, welche die hohe Mediendichtigkeit ihrer Schweißstellen mit einem geringen Bauaufwand und geringer Heizenergie erreicht. Dies wird erfindungsgemäß durch die im Kennzeichen des Anspruches 1 angeführten Maßnahmen erreicht, denen folgende besondere Bedeutung zukommt.

Bei der Erfindung befinden sich in Verlaufsrichtung der beiden Begrenzungskanten Zahnungen, die im Gebrauchsfall für einen wechselseitigen Zahneingriff zwischen benachbarten Segmenten sorgen. Die Begrenzungskanten benachbarter Segmente sind nämlich zueinander komplementär verzahnt. Die Verzahnung erhebt sich nicht nur über die Begrenzungskanten der Segmente, sondern unterschreitet auch diese; sie besteht nämlich aus Laschen bzw. Leisten einerseits und dazwischenliegenden Taschen andererseits. Die Taschen dienen zur Aufnahme der Laschen bzw. Leisten. Im Gebrauchsfall ergibt sich dadurch ein Labyrinthverlauf der Fugen zwischen den Grenzflächen der paarweise ineinandergreifenden Laschen und Taschen. Die Heizmatten haben dabei ein zur Verzahnung konformes, gestuftes Umrißprofil, wodurch eine einlagige Anordnung der Heizleiter sich ergibt. Die Heizmatte befindet sich nämlich nur an der konkaven Innenfläche der Laschen bzw. Leisten, während der Raum der Taschen leitungsfrei bleiben kann. Man erhält eine gute Stabilität und eine hohe Dichtigkeit bei einem nur einlagig gewundenen Leiter. Die einlagigen Leiter erfordern gegenüber der bekannten zweilagigen Anordnung der Leiter in der Schellenwand weniger Heizenergie beim Schweißvorgang. Es empfiehlt sich dabei die Lasche so dünn auszubilden, daß die Heizmatte nicht nur die Innenfläche, sondern auch die Außenfläche der Lasche bzw. der Leiste erwärmt und es dort zu einem erweichten Material kommt. Dadurch kann mit einer einlagigen Anordnung des Leiters eine beidseitige Verschweißung der Lasche bzw. Leiste erlangt werden.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1,: im Querschnitt und im Ausbruch, die beiden Segmente einer erfindungsgemäßen Reparatur-Schelle vor ihrer Montage an einem Leitungsrohr,
- Fig. 2: die Segmente von Fig. 1 nach ihrer Befestigung an dem Leitungsrohr,
- Fig. 3: die perspektivische Ansicht des unteren Segments von Fig. 1 auf die konkave Innenfläche,
- Fig. 4: das in Fig. 3 gezeigte untere Segment, ebenfalls in Perspektive, aber von der gegenüberliegenden Seite aus gesehen,
- Fig. 5,: in einer zur Fig. 3 analogen perspektivischen Darstellung, das obere Segment der in Fig. I bzw. 2 gezeigten Schelle,
- Fig. 6: die ebene Abwickelung der an der konkaven Innenfläche des in Fig. 3 oder 5 gezeigten Segments angeordnete Heizmatte, woraus sowohl ihr besonderes Umrißprofil als auch der Windungsverlauf des zu ihrem Aufbau dienlichen elektrischen Leiters erkennbar sind,
- Fig. 7: in einer zu Fig. 6 analogen Darstellung, die ebenen Abwickelungen der beiden Heizmatten der Segmente von Fig. 3 und 5, nachdem sie mit ihren Begrenzungskanten aneinander befestigt worden sind,
- Fig. 8 und 9: in einer zwar schematischen, aber der Fig. 7 entsprechenden Darstellung, zwei alternative Umrißformen einer Heizmatte,
- Fig. 10,: in einer mit Fig. 2 analogen Querschnittsdarstellung, eine alternative Ausführung der erfindungsgemäßen Schelle,
- Fig. 11: in Draufsicht ein Teilstück des bei der Erfindung verwendbaren elektrischen Leiters in Form eines Mäanders mit beidseitig zu Anschlußzwecken vorgesehenen gestreckten Drehtendstücken,
- Fig. 12,: in starker Vergrößerung, die Draufsicht auf einen aus zwei Komponenten bestehenden Heizstrang, in den der elektrische Leiter von Fig. 11 integriert ist und der auch bei anderen, durch Schweißen am Leitungsrohr befestigbaren Armaturen, z. B. Schweißmuffen, verwendet werden kann,
- Fig. 13: die Querschnittansicht durch den Heizstrang von Fig. 12 längs der dortigen Schnittlinie XIII-XIII, und
- Fig. 14: in einer zwar größeren, aber gegenüber Fig. 12 und 13 verkleinerten Darstellung, einen Längsschnitt durch die Wand einer zur Spritzguß-Herstellung des Segments von Fig. 3 bis 5 verwendbaren Form.

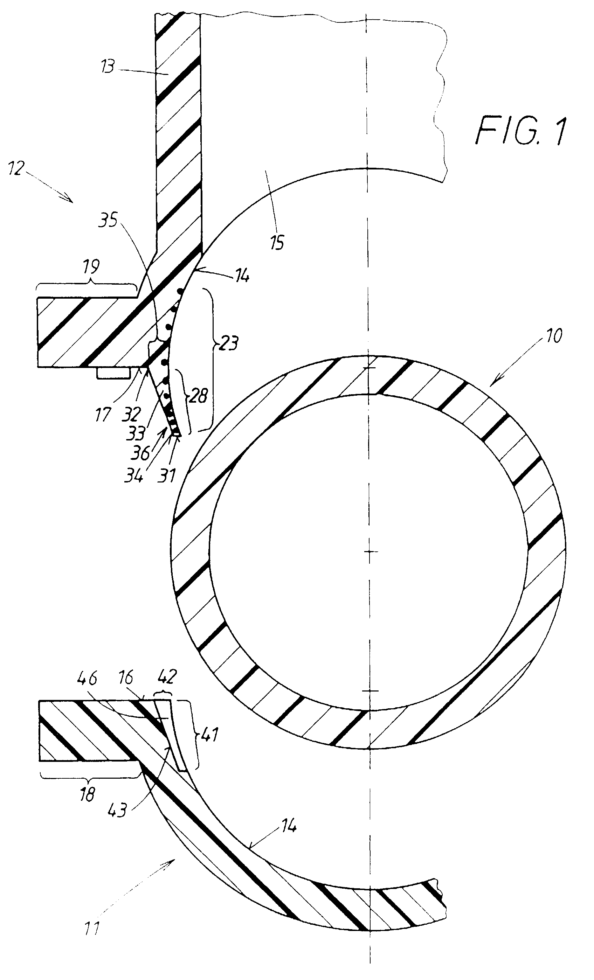

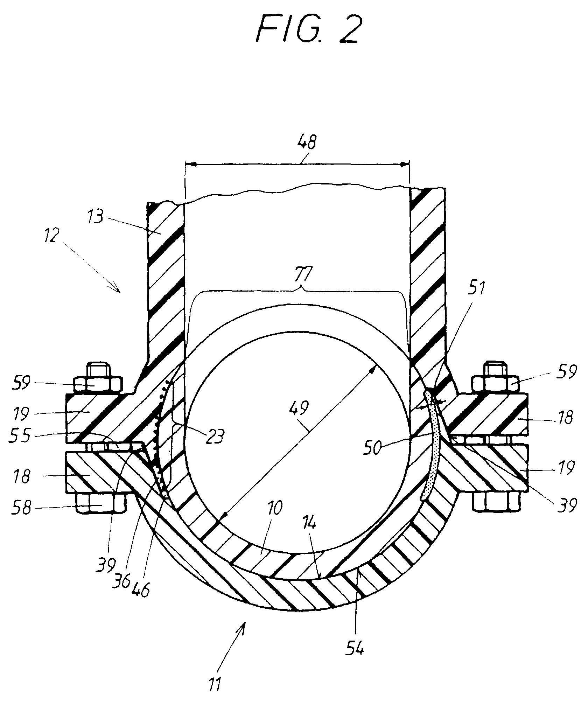

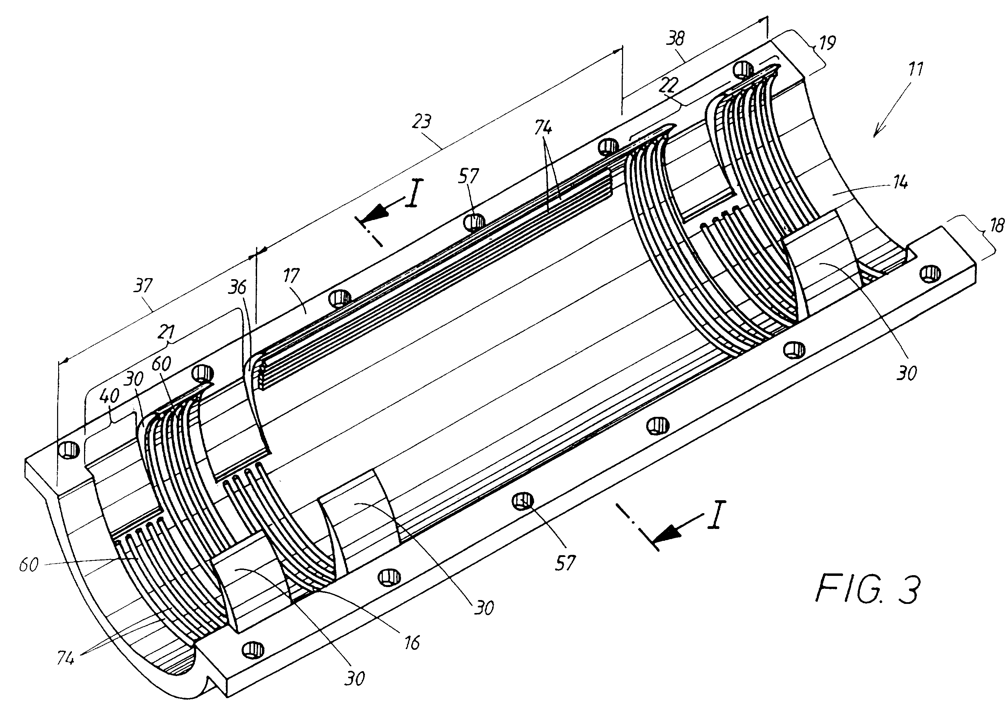

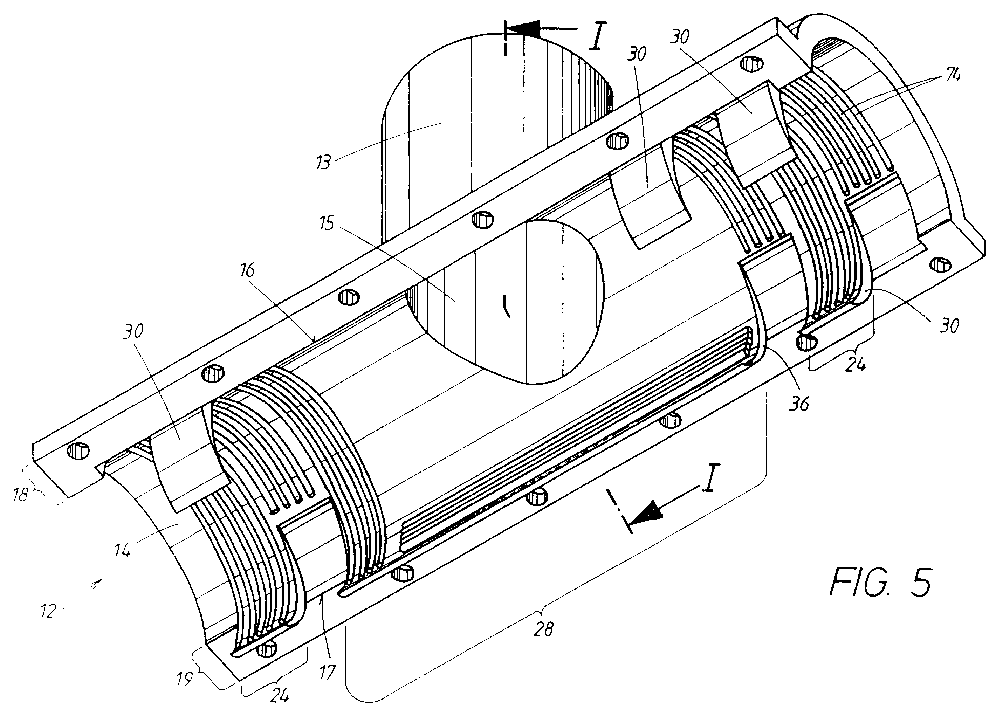

Die in Fig. 1 und 2 gezeigte Reparatur-Schelle besteht aus zwei Zylindersegmenten 11, 12, die dazu bestimmt sind, im Gebrauchsfall um ein Leitungsrohr 10 an der gewünschten Stelle durch Schweißen befestigt zu werden. Die Zylindersegmente 11, 12 sollen nachfolgend kurz "Segmente" bezeichnet werden. sowohl das Leitungsrohr 10 als auch die beiden Segmente 11, 12 sind aus thermisch schweißfähigem Material ausgebildet. Die beiden Segmente 11, 12 sind, wie ein Vergleich von Fig. 3 und 5 zeigt, zwar zueinander formgleich ausgebildet, unterscheiden sich aber dadurch, daß hier nur das obere Segment 12 mit einem Rohrabgang 13 versehen ist. Der Rohrabgang 13 besitzt von vorneherein eine aus Fig. 1 und 5 erkennbare Durchlaßöffnung 15 mit der dortigen, teilzylindrischen konkaven Innenfläche 14. Wegen ihres im übrigen formgleichen Aufbaus genügt es, das eine, nämlich untere Segment 11, zu betrachten.

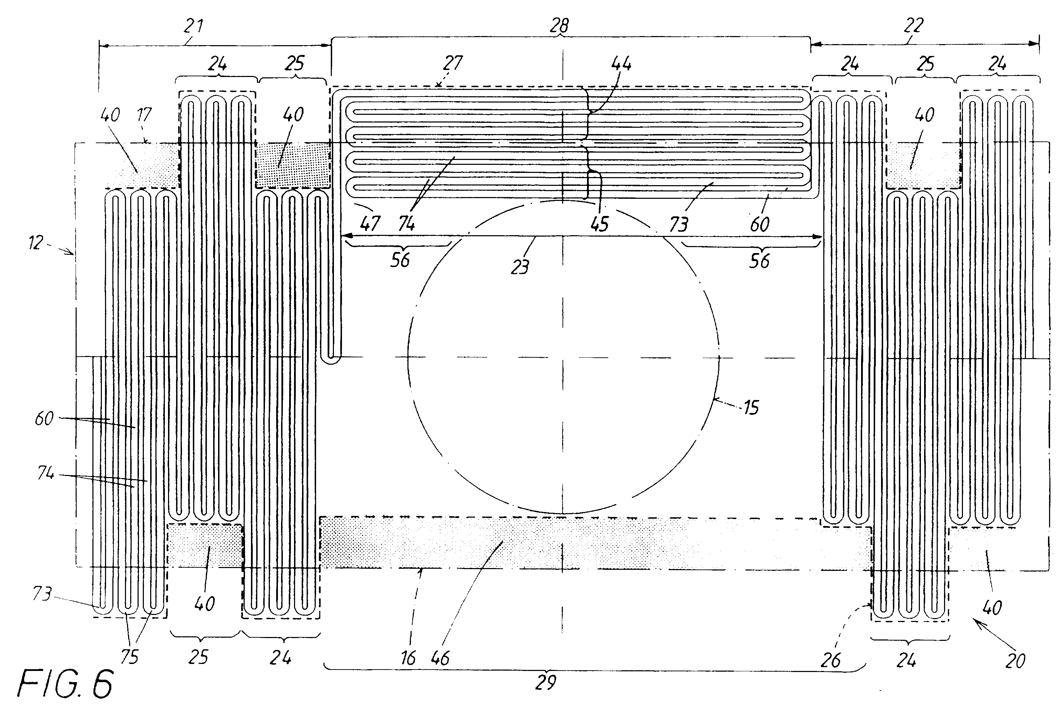

Das Segment 11 besitzt Begrenzungskanten 16, 17, an der sich, zu Befestigungszwecken, radiale Randflansche 18, 19 anschließen. Die Befestigungsmittel bestehen im vorliegenden Fall aus in Fig. 2 erkennbaren Bolzen 58, die aus Fig. 3 erkennbare Bohrungen 57 der Randflansche 18, 19 durchsetzen und mit Muttern 59 verschraubt sind. In die konkaven Innenflächen 14 der beiden Segmente 11, 12 ist jeweils eine Heizmatte 20 integriert, die ein besonderes, am besten aus Fig. 6 erkennbares Aussehen hat. Auch die Heizmatte 20 ist im vorliegenden Fall in beiden Segmenten 11, 12 gleich profiliert, weshalb es genügt, in Fig. 6 die ebene Abwickelung der Heizmatte des oberen Segments 12 von Fig. 3 zu betrachten.

In Fig. 6 sind die Umrisse des oberen Segments 12 ebenfalls in die Ebene mit abgewinkelt worden und durch eine Strichpunktlinie verdeutlicht. Die beiden vorerwähnten Begrenzungskanten 16, 17 des Segments 12 sind hervorgehoben. Eine Besonderheit der Heizmatte 20 besteht darin, daß sie entlang ihrer beiden Begrenzungskanten 16, 17 unterschiedliche Umrißprofile aufweist, deren Umrißlinien 26, 27 in Fig. 6 durch Strichelung hervorgehoben sind. Diese Umrißlinien 26, 27 sind im vorliegenden Fall zueinander komplementär gestaltet. Es gibt schmale Lappen 24 und breite Lappen 28, mit welchen die beiden Umrißlinien 26, 27 die beiden Begrenzungskanten 16, 17 überragen, und dazwischenliegende schmale Lücken 25 und breite Lücken 29, welche die beiden Begrenzungskanten 16, 17 unterragen. Dieses gegliederte Umrißprofil wirkt sich an der aus Fig. 5 erkennbaren teilzylindrischen konkaven Innenfläche natürlich so aus, daß, wie der längs der Schnittlinie I-I von Fig. 5 genommene Querschnitt anhand des breiten Lappens 28 zeigt, die Heizmatte, die Teilzylindrizität der konkaven Innenfläche 14, über die dortige jeweilige Begrenzungskante 17 hinaus fortsetzt. Dieser Formverlauf ist natürlich durch Material des Segments 12 bzw. 11 jeweils verstärkt, das die Lappen 24, 29 auf der von der Segment-Innenfläche 14 abgekehrten Rückseite 34 hinterfüllt und dadurch eine die jeweilige Begrenzungskante 17 überragende schmale Laschen 30 und breite Leisten 36 bildet. Die Leiste 36 bzw. die Laschen 30 sind also einstückig mit dem jeweiligen Segment 12 ausgebildet und besitzt einen in Fig. 1 durch die Schraffur hervorgehobenen Krümmungsquerschnitt 33. Dieser Krümmungsquerschnitt 33 ergibt sich nicht nur durch die Fortsetzung der konkaven Zylindrizität der Innenfläche 14, sondern auch dadurch, daß die Rückseite 34 der Leiste 36 bzw. Lasche 30 konvex gekrümmt verläuft, wenn auch mit einem gegenüber der konkaven Innenfläche 14 flacheren Krümmungsbogen. Dadurch hat die Leiste 36 bzw. die Lasche 30 einen zum freien Ende 31 der Lasche hin sich verjüngenden Querschnitt, der im vorliegenden Fall keilförmig ausgebildet ist. Im Fußbereich 32 hat die Leiste 36 bzw. die Lasche 30 eine größere Querschnittsdicke 35 als im Kopfbereich 31, wo sich hier die Keilspitze befindet.

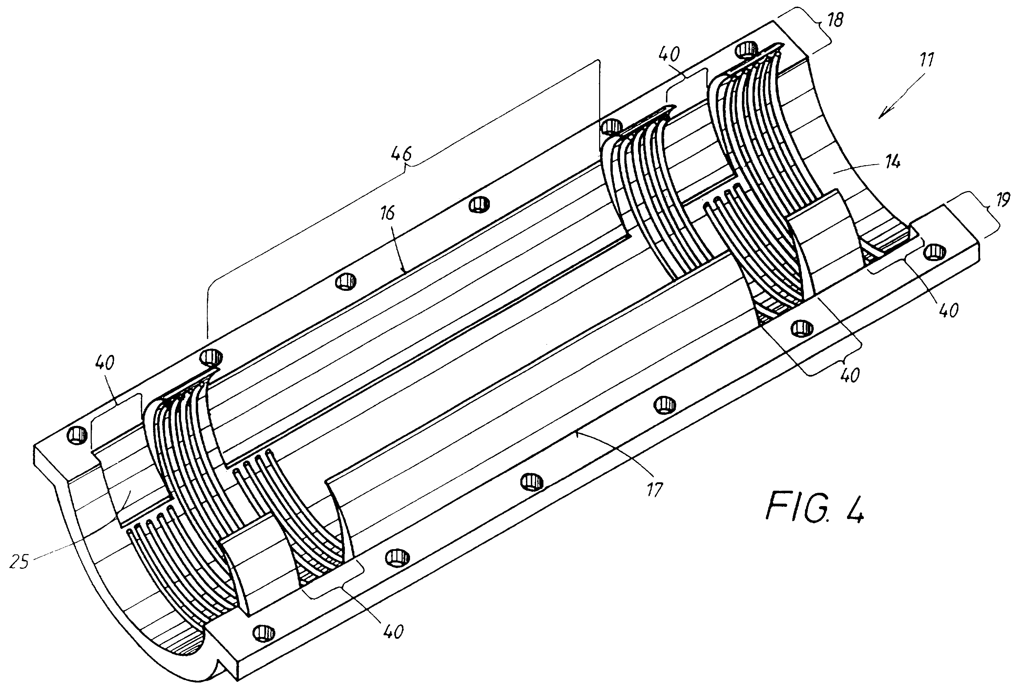

Im Bereich der dazwischen liegenden Lücken 25 ergeben sich die umgekehrten Verhältnisse. Diese Lücken 25 werden nämlich dazu benutzt, um durch geeignete Aussparungen in der konkaven Segment-Innenfläche 14 Taschen 40 mit einer zur vorbeschriebenen Laschenform 31 bis 34 komplementären lichten Weite 41 und Tiefe 42 auszubilden, die den entsprechenden Krümmungsverlauf 43 aufweist. Das ist in Fig. 1 anhand einer die gleiche vorbeschriebene Taschenform 41 bis 43 aufweisenden Grube 46 erläutert, die sich von der in Fig. 4 ebenfalls angedeuteten Tasche 40 nur dadurch unterscheidet, daß sie an der in Fig. 6 angedeuteten breiten Lücke 29 der Heizmatte 20 entsteht. In Fig. 6 sind die Dimension und die Lage der Grube 46 und der im vorliegenden Fall fünf Taschen 40 durch Punktschraffur an den Segment-Begrenzungskanten 16, 17 hervorgehoben.

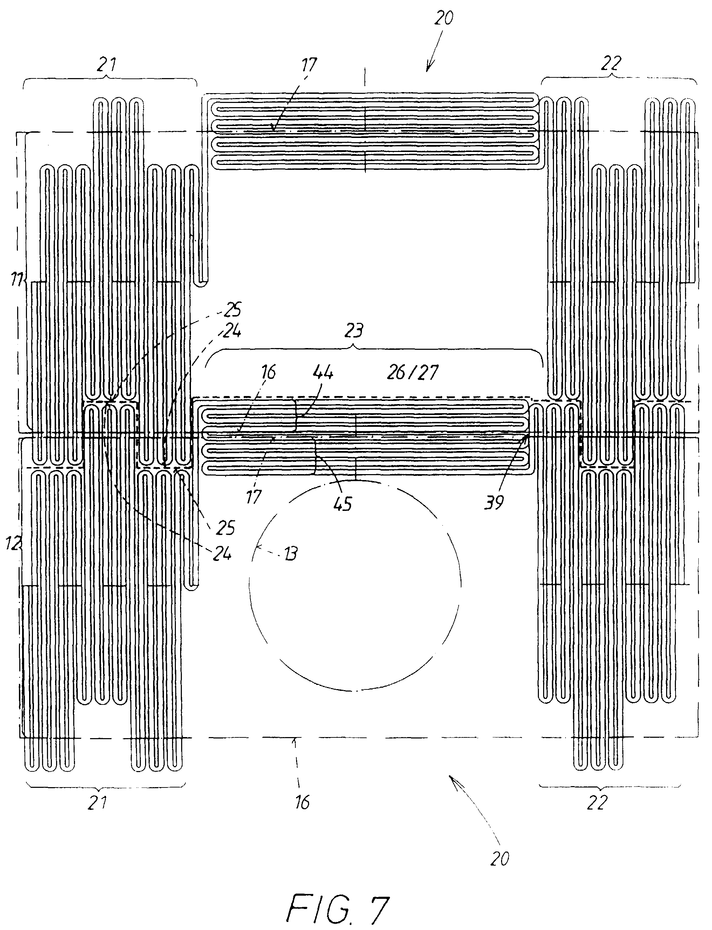

Das in Fig. 6 gezeigte Umrißprofil der Matte 20 eines Segments 11 bzw. 12 läßt sich in drei Abschnitte 21 bis 23 einteilen, die entlang der beiden Umrißprofil-Linien 26, 27 unterschiedlich profiliert sind. In den aus Fig. 3 erkennbaren beiden Endbereichen 37, 38 des jeweiligen Segments befinden sich zwei als "Heizmanschetten" zu bezeichende Abschnitte 21, 22, weil diese Abschnitte, wie aus dem Gebrauchsfall in Fig. 7 in ebener Darstellung deutlich ist, das mit der Schelle zu versehene Leitungsrohr 10 von Fig. 2 als geschlossene Manschette umschließen. In Fig. 7 sind die beiden Segmente 11, 12 mit ihren Begrenzungskanten 16, 17 in Berührung, Man erkennt, daß die Lappen 24 des einen Segments 11 die Lücken 25 des benachbarten Segments 12 ausfüllen, was auch umgekehrt für die Lappen 24 des Segments 12 und die Lücken 25 des Segments 11 gilt.

Zwischen den beiden aneinander stoßenden Begrenzungskanten 16, 17 befindet sich die in Fig. 7 durch einen Pfeil verdeutlichte Berührungsfuge 39 der beiden Segmente 11, 12. Die hier zusammenfallenden beiden Umrißlinien 26, 27 sind ebenfalls gestrichelt verdeutlicht. Man erkennt, daß diese Linien 26, 27 ein Stufenprofil aufweisen, das mehrfach die Berührungsfuge 39 zwischen den beiden Segmenten 11, 12 kreuzt. Es entsteht eine Art "Verzahnung" zwischen den lückenlos ineinandergreifenden Heizmanschetten 21 der beiden Segmente 11, 12. Die ringförmig geschlossene Form ergibt sich aus Fig. 7, wenn man die dort dargestellte ebene Lage der beiden Matten 20 zylindrisch, entsprechend den beiden konkaven Innenflächen 14 der Segmente 11, 12 verformt, wo die Matten 20 integriert sind. Es kommen nämlich auch die beiden in Fig. 7 ganz oben und ganz unten strichpunktiert angedeuteten Begrenzungskanten 17, 16 der beiden Segmente 11, 12 miteinander in Berührung.

Wie schon aus Fig. 6 zu erkennen war, ist die Lage der Lappen 24 und Lücken 25 im Bereich der Heizmanschette 21 bezüglich der beiden Umrißprofil-Linien 26, 27 komplementär; die Lappen 24 und Lücken 25 liegen sich jeweils paarweise gegenüber. Ein ähnlicher Aufbau liegt auch bei der am gegenüberliegenden Segmentende 38 von Fig. 3 befindlichen Heizmanschette 22 vor. Bei der Manschette 22 haben aber die Lappen 24 und Lücken 25, im Vergleich mit der erstgenannten Heizmanschette 21, vertauscht. Wie das in Fig. 6 auch bei der Heizmanschette 22 gestrichelte Umrißprofil 26, 27 zeigt, ergibt sich die Form der Manschette 22 aus einer doppelten Spiegelung um zwei senkrechte Mittelachsen aus dem entsprechenden Profil der erstgenannten Heizmanschette 21. Mathematisch ausgedrückt heißt dies, daß die Heizmanschette 22 einen zur Heizmanschette 21 zentrisch-symmetrischen Umriß besitzt. Wie Fig. 3 und Fig. 4 erkennen lassen, gilt diese Symmetrieform auch hinsichtlich der im Bereich der Lappen 24 räumlich gekrümmten Laschen 30 und der an den Lücken 25 vorgesehenen Taschen 40.

Der oben erwähnte dritte Abschnitt der Heizmatte 20 ist ein aus Fig. 6 erkennbarer Heizstreifen 23, der sich im wesentlichen achsparallel in der Heizmatte 20 erstreckt und zwischen den beiden Heizmanschetten 21, 22 angeordnet ist. Dieser Heizstreifen 23 findet an der Heizmanschette 22 bereits einen Lappen 24 vor und läßt sich daher mit diesem, wie in Fig. 6 verdeutlicht, zu dem oben erwähnten breiten Lappen 28 zusammenfassen. Ausweislich der Fig. 6 kommt die eine Streifenhälfte 44 oberhalb der Segment-Begrenzungskante 17 zu liegen, und ist daher, zusammen mit dem benachbarten Lappen 24 der zweiten Heizmanschette 22 in der konkaven Innenfläche der schon beschriebenen gekrümmten Leiste 36 integriert. Das ist in Fig. 3 veranschaulicht. Die andere Streifenhälfte 45 kommt unterhalb der Begrenzungskante 17 an der konkaven Innenfläche 14 des Segments 11 bzw. 12 zu liegen. Bedeutsam ist, wie am besten aus Fig. 6 zu entnehmen ist, daß der Heizstreifen 23 außermittig liegt, weshalb eine beachtliche, danebenliegende Rest-Innenfläche 47 des Segments von der Heizmatte 20 freigehalten ist. In diesem Raum läßt sich, wie strichpunktiert in Fig. 6 veranschaulicht, die Durchlaßöffnung 15 des am Segment 12 sitzenden Rohrabgangs 13 anordnen. Wie aus Fig. 2 zu entnehmen ist, besitzt der Rohrabgang 13 einen Öffnungsdurchmesser 48, der gleich dem Rohrdurchmesser 49 des Leitungsrohres 10 sein kann. Bedarfsweise könnten auch noch die in Fig. 6 außerhalb der Durchlaßöffnung 15 in der Rest-Innenfläche 47 vorgesehenen Zwickel 56 mit Windungen eines noch näher zu beschreibenden elektrischen Leiters ausgefüllt sein und dadurch zur Bildung der Heizmatte 20 beitragen.

Zur Einsparung von Heizenergie kommt man aber mit verhältnismäßig schmalen Heizstreifen 23 aus, weil diese, wie aus dem in Fig. 7 gezeigten Gebrauchsfall zu entnehmen ist, mit ihren beiden Streifenhälften 44, 45 beidseitig der Trennfuge 39 zu liegen kommen und daher hier für eine sehr effektive mediendichte Schweißverbindung sorgen. Diese Verhältnisse sind besonders gut aus Fig. 2 zu erkennen, wo die beiden Segmente 11, 12 zu einem das Leitungsrohr 10 fertigen Schelle zusammengefügt sind. Man erkennt in Fig. 2, wie die mit dem Heizstreifen 23 ausgerüstete gekrümmte Leiste 36 in die komplementär gekrümmte Grube 46 eingreift. In diesen Bereichen 36, 46, entsteht also eine Schellenwand, zu deren Aufbau beide Segmente 11, 12 mit ihrem schweißfähigen Material beitragen. Damit sind die wichtigsten Bereiche der konkaven Schelleninnenfläche 14 mit der Heizmatte 20 belegt, wovon in Fig. 2 der erwähnte Heizstreifen 23 zu erkennen ist. Wie bereits erwähnt wurde, liegt im Bereich der die Endbereiche 37, 38 der Segmente 11 bzw. 12 bestimmenden Heizmanschetten 21, 22 sogar eine vollflächige Anordnung der beschriebenen Heizmatten-Teile an der Schellen-Innenfläche 14 vor.

Durch die bereits beschriebenen Befestigungsmittel 57, 59 werden die beiden Segmente 11, 12 an ihren aus Fig. 2 erkennbaren Flanschen zusammengedrückt. Ein am einen Radialflansch 19 vorgesehener Anschlag 55 erlaubt es, das Ausmaß des Zusammenpressens der beiden Segmente 11, 12 zu bestimmen. Dadurch wird mittels der gekrümmten Grube 46 die Leiste 36 an die Mantelfläche 54 angepreßt. Das gilt natürlich sinngemäß für die insoweit formgleichen Laschen 30 und Taschen 40. Dadurch ergibt sich auch an diesen Stellen ein guter radialer Andruck der montierten Schelle 11, 12 an der Rohr-Mantelfläche 54. Beim Aufheizen der Matte verflüssigt sich das schweißfähige Material an der Berührungszone zwischen der konkaven Segment-Innenfläche 14 und der konvexen Rohr-Mantelfläche 54. Es gibt eine definierte Zone 50 der Materialerweichung, die in Fig. 2 durch Punktschraffur hervorgehoben ist.

Dieses erweichte Material 50 könnte durch die Berührungsfuge 39 aufgrund des zwischen den beiden Segmenten 11, 12 herrschenden Drucks nach außen gelangen. In manchen Fällen ist dies sogar erwünscht, weil auf diese Weise durch das Herausströmen des Materials an einer definierten Stelle ein Indikator für einen guten Vollzug der Schweißung erreicht wird. In anderen Fällen ist dies aber nicht erwünscht, was durch die Erfindung ebenfalls leicht verwirklicht werden kann. Dazu ist es nämlich nur erforderlich, die aus Fig. 1 im Fußbereich 32 ersichtliche Querschnittsdicke 35 der dortigen Leiste 36 bzw. einer analogen Lasche 30 etwas größer auszubilden, als der in Fig. 2 angedeuteten Stärke 51 dieser Materialerweichungszone 50 in der Keilform der Leiste 36 bzw. Lasche 30 entspricht.

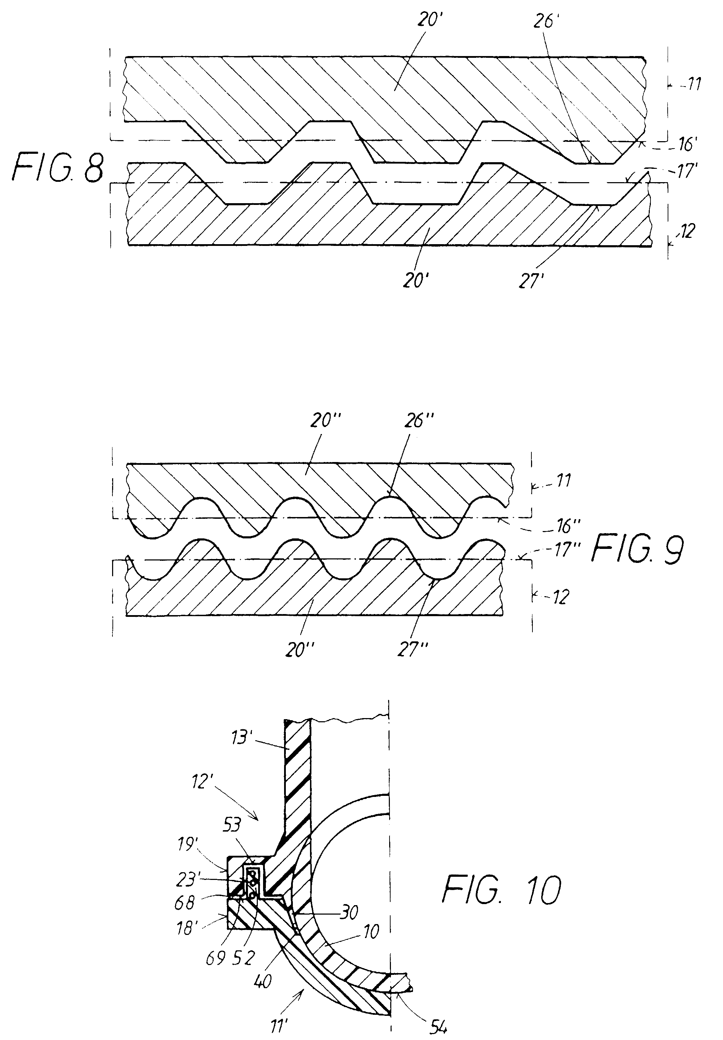

Fig. 8 und 9 zeigen in einer schematischen Darstellung alternative Verhältnisse für Umrißprofile der Heizmatten an den beiden auch dort strichpunktiert angedeuteten Segmenten 11, 12, und zwar in einer mit Fig. 7 vergleichbaren Darstellung. Die Lage der beiden Heizmatten 20', 20" ist durch eine gegensinnige Schraffur hervorgehoben und zeigt lediglich die zueinander komplementären Umrißprofil-Linien 26', 27' bzw. 26", 27" beidlängsseits der auch dort bruchstückhaft eingezeichneten Segment-Begrenzungskanten 16', 17' bzw. 16", 17". In Fig. 8 wird anstelle des vorbeschriebenen rechteckförmigen Stufenprofils ein trapezförmiges oder zahnförmiges Profil 26', 27' verwendet. In Fig. 9 dagegen haben die Umrißprofile 26", 27" eine Wellenform. Diese Umrißprofile lassen sich durch einen geeigneten Windungsverlauf eines den elektrischen Leiter umfassenden Strangs 60 ohne weiteres erzielen, was noch näher beschrieben werden wird.

Wie bereits erwähnt wurde und aus Fig. 1 zu entnehmen ist, hat der Rohrabgang 13 von vorneherein eine in die konkave Innenfläche 14 mündende Durchlaßöffnung 15. Nach dem Aufheizen der in den beiden Segmenten 11, 12 integrierten Heizmatte 20 und dem Erkalten der Schmelze läßt sich dann durch eine Druckprobe leicht feststellen, ob die Schweißverbindung tatsächlich einwandfrei ist. Dazu ist es lediglich erforderlich, an den Rohrabgang 13 eine Druckquelle und ein Druckmeßgerät anzulegen. Das Leitungsrohr 10 ist an der Anbringungsstelle der Schelle 11, 12 noch nicht angebohrt und steht unter beliebig hohem Mediendruck. Erst wenn die Druckprobe befriedigend ausgefallen ist, wird das Leitungsrohr 10 angebohrt, was ebenfalls durch diesen Rohrabgang 13 oder über einen auch am gegenüberliegenden Segment 11 vorgesehenen analogen Rohrabgang erfolgen kann. Es entsteht dann, wie Fig. 2 zeigt, im Inneren des Rohrabgangs 13 ein Bohrloch 77 im Leitungsrohr 10, wodurch ein Medienfluß im Rohrabgang 13 erzeugt wird.

Die Fig. 10 zeigt in einer zu Fig. 2 analogen Querschnittsdarstellung eine alternative Ausbildung eines den Heizstreifen 23' einer zu Fig. 6 analogen Heizmatte 20 aufnehmenden Segments 11'. Die dort gezeigten Elemente 11', 12', von denen einer auch den Rohrabgang 13' tragen kann, haben an der Flanschinnenfläche 68 des Randflansches 18' eine vertikal aufragende Längsrippe 52, während an der gegenüberliegenden Flanschinnenfläche 59 des Randflansches 19' eine Längsnut 53 eingelassen ist, die hinsichtlich Form und Größe zur Gestalt der Längsrippe 52 komplementär ist. In dem mittleren Bereich der dortigen Heizmatte, wo der Heizstreifen 23' liegt, wird also die Berührungsfuge zwischen den Flanschen 18', 19' schweißgedichtet. In den auch in diesem Fall vorgesehenen Heizmanschetten 21, 22, also in den Endbereichen der Segmente 11' und 12', gibt es natürlich wieder die vorbeschriebenen, formschlüssig ineinander greifenden Laschen 30 und Taschen 40. Diese Heizmanschetten erzeugen Schweißzonen, welche die dortige Rohrmantelfläche 54 ebenfalls allseitig vollflächig umschließen.

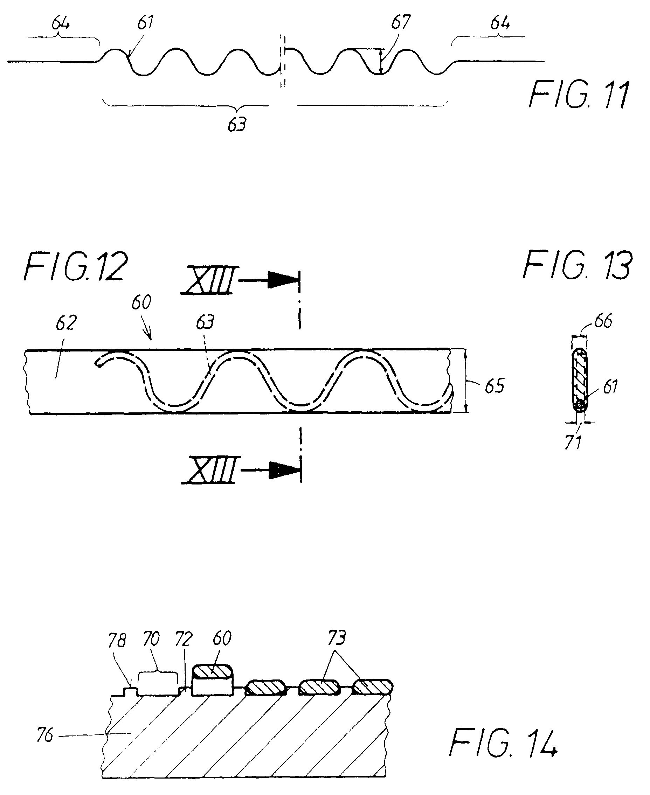

Der in der Heizmatte 20 verwendete Leiter 61 hat eine besondere Form und stellt nur die eine Komponente eines in den Fig. 11 bis 14 verdeutlichten kombinierten Heizstrangs 60 dar. Der aus elektrisch leitendem Material bestehende Draht des Leiters 61 ist zu einem mäanderförmigen Gebilde 63 verformt. Diese Mäanderform 63 kommt dadurch zustande, daß man den Draht durch zwei miteinander kämmende Zahnräder führt, deren Zahnform die Bögen des Mäanders 63 erzeugt. Die gestreckten Drahtstücke 64 entstehen einfach dadurch, daß an diesen Stellen des automatischen Vorschubs des Drahtes 61 die vorerwähnten beiden Zahnräder soweit voneinander abgehoben werden, daß sie mit ihren Zähnen nicht mehr ineinander greifen. Der Mäander 63 ist eine eben verlaufende Wellenlinie. Wie Fig. 11 zeigt, ist der Mäander 63 mit gestreckt weiterlaufenden Drahtendstücken 64 versehen, die zum Anschluß an elektrischen Kontakte dienen, die an den Segmenten 11 und 12 jeweils sitzen. Diese Kontakte dienen zum Anschluß eines Schweißautomaten. Die am einen Ende der jeweiligen Heizmatte 20 liegenden Kontakte sind durch ein Kabel miteinander verbunden, weshalb beide Matten der Segmente 11, 12 gleichzeitig erwärmt werden und daher zu einer gleichförmigen Verschweißung an allen Stellen der fertigen Schelle 11, 12 führen.

Der Mäander 63 wird nun, wie in starker Vergrößerung aus Fig. 12 zu ersehen ist, in ein Flachband 62 aus thermisch schweißfähigem Material integriert, das nun die zweite Komponente des vorerwähnten Heizstrangs 60 bildet. Dieses Flachband 62 hat, wie aus Fig. 13 zu entnehmen ist, den Querschnitt eines flachen Rechtecks, dessen Bandbreite 65 nur unwesentlich größer als die aus Fig. 11 erkennbare Mäanderweite 67 des Drahtes ausgebildet ist. Die Banddicke 66 ist ebenfalls nur unwesentlich größer als der aus Fig. 13 erkennbare Drahtdurchmesser 71.

Fig. 14 zeigt einen Längsschnitt durch die Wand eines Spritzgußwerkzeugs 76, in dem ein Segment 11 bzw. 12 hergestellt werden soll. Um die konkave Innenfläche 14 des Segments 11, 12 herstellen zu können, liegt im Werkzeug 76 eine konvexe Form-Innenfläche 77 mit Rillen 70 vor, in welche der Heizstrang 60, vor dem Einspritzen des Segment-Materials, eingedrückt wird. Zwischen den Rillen 70 können Trennstege 61 vorgesehen sein, die auch so spitz zulaufen, daß sich benachbarte, in Fig. 14 bereits eingelegte Windungen 73 des Heizstrangs 60 berühren können. Die Windungen 73 des in der Form-Innenfläche 78 verlegten Heizstrangs 60 werden in den Rillen 70 fixiert. Durch Einführen des Segment-Materials in die Form wird der Heizstrang 60 mit seinen Windungen 73 in das entstehende Segment 11 bzw. 12 integriert.

Ein möglicher Verlauf der Windungen 63 des Heizstrangs 60 ist in Fig. 6 gezeigt. Wie dort ersichtlich, bestehen die Windungen 73 aus parallelen Schenkeln 74 und dazwischen liegenden Wendestellen 75. Die Windungen des Heizstrangs 60 sind dabei in den Heizmanschetten 21, 22 gegensätzlich zu denjenigen im dazwischenliegenden Heizstreifen 23 positioniert. In Fig. 5 ist der Heizstrang 60, der einfachen Darstellung wegen, im Rundprofil gezeichnet und nur seine Parallelschenkel 74 dargestellt. Man muß sich an den in Fig. 5 sichtbaren Enden der Parallelschenkel 74 auch noch die in Fig. 6 erkennbaren Wendestellen 75 hinzudenken. Wie aus Fig. 5 und Fig. 6 zu entnehmen ist, verlaufen die Parallelschenkel 74 des Strangs 60 im Bereich der Heizmanschetten 21, 22 in Zylinder-Umfangsrichtung, aber im Bereich des Heizstreifens 23 in Zylinder-Achsrichtung des Segments 11. Die Wendestellen 75 kommen dann, was nur aus Fig. 6 erkennbar ist, an den gestrichelten Umrißprofillinien 26, 27 zu liegen.

Eine solche Verlegung des elektrischen Leiters 61 in einem Heizstrang 60 in Form von flachen, nebeneinander liegenden Windungen 73, ist für den Schweißvorgang besonders effektiv. Die Anwendung eines solchen Heizstrangs 60 ist daher nicht nur auf Segmente 11, 12 der vorbeschriebenen Schelle beschränkt. Man könnte auch andere Schweißarmaturen in dieser Weise mit elektrischen Leitern ausrüsten, z. B. sogenannte Schweißmuffen, mit denen man im Stumpfstoß aneinandergefügte Rohre mediendicht miteinander verbinden kann. Eine weitere Anwendungsmöglichkeit solcher Heizstränge 60 ergibt sich an Sattelflächen von Anbohrarmaturen oder Ventil-Anbohrarmaturen, die in analoger Weise an Leitungsrohre 10 durch Schweißen befestigt werden sollen. Der Herstellung und Anwendung des Heizstrangs 60 kommt also eine eigenständige erfinderische Bedeutung zu.

### Bezugszeichenliste:

- 10: Leitungsrohr
- 11, 11': Zylindersegment, unteres Segment
- 12, 12': Zylindersegment, oberes Segment
- 13, 13': Rohrabgang an 12 bzw. 12'
- 14: konkave Innenfläche von 11, 11' bzw. 12, 12'
- 15: Durchlaßöffnung von 13 in 12
- 16, 16', 16": erste Begrenzungskante des Segments
- 17. 17', 17": zweite Begrenzungskante des Segments
- 18, 18': Radialflansch bei 16
- 19, 19': Radialflansch an 17
- 20, 20', 20": Heizmatte
- 21: Endabschnitt von 20, Teil der Heizmanschette
- 22: Endabschnitt von 20, Teil der Heizmanschette
- 23, 23': Heizstreifen zwischen 21, 22
- 24: schmaler Lappen
- 25: schmale Lücke
- 26, 26', 26": erste Umrißprofil-Linie von 20, 20' bzw. 20" bei 16
- 27, 27', 27": zweite Umrißprofil-Linie von 20, 20', 20" bei 17
- 28: Zwischenabschnitt
- 29: breite Lücke
- 30: Lasche bei 24
- 31: Laschenform, Kopfbereich von 30
- 32: Laschenform, Fußbereich von 30
- 33: Laschenform, Krümmungsquerschnitt von 30
- 34: Laschenform, Rückseite von 30
- 35: Querschnittsdicke von 30 bei 32
- 36: Leiste bei 28 (Fig. 1)
- 37: erster Endbereich von 11 bzw. 12
- 38: zweiter Endbereich von 11 bzw. 12
- 39: Berührungsfuge zwischen 16, 17
- 40: Tasche bei 25
- 41: Taschenform, lichte Weite von 40
- 42: Taschenform, lichte Tiefe von 40
- 43: Taschenform, Krümmungsverlauf von 40
- 44: erste Streifenhälfte von 23
- 45: zweite Streifenhälfte von 23
- 46: Grube bei 29
- 47: Restinnenfläche von 14 (Fig. 6)
- 48: Öffnungsdurchmesser von 13 (Fig. 2)
- 49: Rohrdurchmesser von 10 (Fig. 2)
- 50: Materialerweichungszone (Fig. 2)
- 51: Stärke von 50 (Fig. 2)
- 52: Längsrippe an 18' (Fig. 10)
- 53: Längsnut an 19' (Fig. 10)
- 54: Mantelfläche von 10 (Fig. 2)
- 55: Anschlag an 19 (Fig. 2)
- 56: Zwickel (Fig. 6)
- 57: Befestigungsmittel, Bohrung in 18, 18' bzw. 19, 19'
- 58: Befestigungsmittel, Bolzen
- 59: Befestigungsmittel, Mutter
- 60: Heizstrang
- 61: elektrischer Leiter in 60
- 62: Flachband von 60
- 63: Mäanderform von 61
- 64: gestrecktes Drahtendstück von 61
- 65: Bandbreite von 62
- 66: Banddicke von 62
- 67: Mäanderbreite von 63
- 68: Flanschinnenfläche von 18'
- 69: Flanschinnenfläche von 19'
- 70: Rille (Fig. 14)
- 71: Drahtdurchmesser von 61 (Fig. 13)
- 72: Trennsteg zwischen 70 in 76 (Fig. 14)
- 73: Windungen von 60 (Fig. 6
- 74: parallele Schenkel, Parallelschenkel von 73 (Fig. 6)
- 75: Wendestelle zwischen 74 (Fig. 6)
- 76: Spritzguß-Werkzeug für 11 oder 12 (Fig. 14)
- 77: Bohrloch in 10 (Fig. 2)
- 78: Forminnenfläche von 76 (Fig. 14)

## Patentansprüche

1. Schelle aus thermisch schweißfähigem Material für ein ebenfalls aus schweißfähigem Material bestehendes Leitungsrohr (10), wie eine Reparatur-Schelle,
aus mindestens zwei, das Leitungsrohr (10) im Gebrauchsfall umschließenden, Segmenten (11, 12), von denen wenigstens eines ggf. einen Rohrabgang (13) aufweist,
mit im Gebrauchsfall einander zugekehrten Begrenzungskanten (16, 17) an den Segmenten (11, 12), die unter Druck aneinander befestigbar sind,
mit die Begrenzungskanten (16, 17) überragenden keilförmigen, gekrümmten Ansätzen an dem einen Segment, die im Gebrauchs fall im Zwickel zwischen der Innenfläche des benachbarten Segments und dem Leitungsrohr (10) liegen,
und mit Heizmatten (20) aus gewundenen, elektrisch aufheizbaren Leitern (61), die an den Innenflächen (14) der Segmente (11, 12) fest integriert sind,
**dadurch gekennzeichnet,**
daß an jeder der beiden Begrenzungskanten (16, 17) eines jeden Segments (11, 12) die Ansätze und Zwickel miteinander im Wechsel angeordnet sind, und zwar komplementär zu denjenigen des jeweils benachbarten Segments (12, 11), und eine Zahnung bilden aus die Begrenzungskante (16, 17) stellenweise überragenden Laschen (30) oder Leisten (36) einerseits
und aus dazwischen liegenden Taschen (40, 46) andererseits, welche die Begrenzungskante (16, 17) unterschreiten und im Gebrauchsfall zur Aufnahme der Laschen (30) oder Leisten (36) dienen,
und daß die Heizmatten (20) ein zur Verzahnung konformes, gestuftes Umrißprofil besitzen aus vorspringenden Lappen (24, 26) im Bereich der Segment-Laschen (30) bzw. -Leisten (36) und aus dazwischenliegenden Lücken (25, 29) im Bereich der Taschen (40, 46).

2. Schelle nach Anspruch 1, dadurch gekennzeichnet, daß die Verzahnung an den Begrenzungskanten (16, 17) des Segments (11, 12) die Heizmatte (20) in drei unterschiedliche Axialabschnitte (21, 22, 28) gliedert,
nämlich zwei Endabschnitte (21, 22), die im Gebrauchsfall eine ringförmige geschlossene Heizmanschette um das Leitungsrohr (10) bilden, wo die gewundenen Leiter (61) sich teilringförmig vom Taschengrund bzw. vom Laschenende an der einen Begrenzungskante (16) bis zum Laschenende bzw. Taschengrund an der gegenüberliegenden Begrenzungskante (17) erstrecken,
und einem oder mehreren versetzten Zwischenabschnitten (28), die im Bereich der einen Begrenzungskante (17) des Segments (11, 12) jeweils einen Heizstreifen (23) bilden und sich wenigstens teilweise (44) in die vorspringende Leiste (36) erstrecken,
wo die gewundenen Leiter (61) zwar zwischen den beiden Endabschnitten (21, 22) verlaufen, aber die angrenzende Restinnenfläche (47) des Segments (11, 12) leiterfrei lassen.

3. Schelle nach Anspruch 1 oder 2, dadurch gekennzeichnet, daß die Querschnittsdicke (35) der keilförmigen, gekrummten Lasche (30) bzw. Leiste (36) im der Begrenzungskante (16, 17) des Segments (11, 12) zugekehrten Fußbereich (32) größer ausgebildet ist, als die Stärke (51) der Materialerweichungszone, die sich beim Aufheizer des elektrischen Leiters (61) in der Lasche (30) bzw. in der Leiste (36) ergibt.

4. Schelle nach einem oder mehreren der Ansprüche 1 bis 3, dadurch gekennzeichnet, daß der elektrische Leiter (61) in einem erwärmungsfreien Axialabstand zu den Seitenflächen der Lasche (30) bzw. Leiste (36) angeordnet ist, welcher größer als die Stärke (51) der Materialerweichungszone (50) beim Aufheizen ist.

5. Schelle nach einem oder mehreren der Ansprüche 1 bis 4, dadurch gekennzeichnet, daß die Heizmatte (20) eines Segments (11, 12) mit ihrem gegliederten Umrißprofil (26, 27) aus den Windungen (73) eines einzigen durchlaufenden elektrischen Leiters (61) erzeugt ist.

6. Schelle nach Anspruch 5, dadurch gekennzeichnet, daß die Leiter (61) der Heizmatten (20) aller Segmente (11, 12) miteinander elektrisch in Reihe geschaltet und, zwecks gemeinsamer gleichförmiger Aufheizung, an einen Schweißautomaten angeschlossen sind.

7. Schelle nach einem oder mehreren der Ansprüche 1 bis 6, dadurch gekennzeichnet, daß die Windungen (73) des Leiters (61) aus parallelen Schenkeln 74 und dazwischen liegenden Wendestellen (75) bestehen,
wobei die Schenkel (74) im Bereich der beiden einen Teilring der geschlossenen Heizmanschette erzeugenden Endabschnitte (21, 22) der Heizmatte (20) in Zylinderumfangsrichtung verlaufen,
und im Bereich des im Zwischenabschnitt (28) der Heizmatte (20) befindlichen Heizstreifens (23) sich in Zylinderachsrichtung des Segments (11, 12) erstrecken,
während die Wendestellen (75) an der gestuften Umrißprofil-Linie (26, 27) der Lappen (24, 28) bzw. Lücken (25, 29) der Heizmatte (20) liegen.

8. Schelle nach einem oder mehreren der Ansprüche 1 bis 7, dadurch gekennzeichnet, daß der elektrische Leiter (61) aus einem mäanderformig (63), in Form einer Wellenlinie verlaufenden Draht besteht und daß der Mäander-Draht (63) in Windungen (73) verlegt ist, welche die Heizmatte (20) erzeugen.

9. Schelle nach Anspruch 8, dadurch gekennzeichnet, daß der Mäander-Draht (63) an seinen beiden, aus dem Heizstrang (60) herausragenden Enden gestreckt weiterverlaufende Draht-Endstücke (64) aufweist, die an elektrische Kontakte des Segments (11, 12) angeschlossen sind.

10. Schelle nach einem oder mehreren der Ansprüche 1 bis 9, dadurch gekennzeichnet, daß die Stufen im Umrißprofil (26, 27) der Heizmatte (20) rechtwinklig ausgebildet sind.

11. Schelle nach einem oder mehreren der Ansprüche 1 bis 10, dadurch gekennzeichnet, daß die Segmente (11, 12) an wenigstens einer ihrer beiden achsparallelen Begrenzungskanten (16, 17) einen radialen Randflansch (18, 19) aufweisen und zwischen den Randflanschen benachbarter Segmente (11, 12) Befestigungsmittel (57 bis 59) angreifen, um die das Leitungsrohr (10) mit radialem Druck umschließende Schelle zu bilden.

12. Schelle nach einem oder mehreren der Ansprüche 1 bis 11, dadurch gekennzeichnet, daß der Randflansch (18') des Segments (11') auf seiner Flanschinnenfläche eine Längsrippe (52) trägt, in die der achsparallele Heizstreifen (23') der Heizmatte integriert ist,
und daß an der Flanschinnenfläche (69) vom gegenüberliegenden Randflansch (19') dieses Segments (11') und/oder des benachbarten Segments (12') eine Längsnut (53) mit einer zur Form der Längsrippe (52) komplementären lichten Weite und Tiefe eingeformt ist,
die im Gebrauchsfall zur Aufnahme der Längsrippe (52) dient.

13. Schelle nach einem oder mehreren der Ansprüche 1 bis 12, dadurch gekennzeichnet, daß die Querschnittsdicke der Lasche (30) bzw. der Leiste (36) so klein ausgebildet ist, daß das erweichte Material (50) nach außen gelangt.

## Claims

1. Clip, such as a repair clip, of a thermoweldable material for a line pipe (10), which also consists of a weldable material,
which clip consists of at least two segments (11, 12) which embrace the line pipe (10) when in use and at least one of which optionally comprises a pipe junction (13),
with boundary edges (16, 17), which are turned towards one another when in use and can be fastened together under pressure, at the segments (11, 12),
with wedge-shaped, curved lugs, projecting beyond the boundary edges (16, 17), at one segment, which lugs lie in the gusset between the inner face of the adjacent segment and the line pipe (10) when in use,
and with heating mats (20) of wound, electrically heatable conductors (61), which are integrated at the inner faces (14) of the segments (11, 12),
characterised in
that the lugs and gussets are disposed in alternating fashion at each of the two boundary edges (16, 17) of each segment (11, 12), so as to be complementary to those of the respective adjacent segment (12, 11), and form a tooth system from the boundary edge (16, 17) of straps (30) or fillets (31), which project at certain points, on one side
and from intervening pockets (40, 46) on the other, which pockets do not extend as far as the boundary edge (16, 17) and serve to accommodate the straps (30) or fillets (36) when in use,
and that the heating mats (20) have a stepped contour which conforms with the tooth system and consists of protruding lobes (24, 26) in the region of the segment straps (30) or fillets (36) and of intervening gaps (25, 29) in the region of the pockets (40, 46).

2. Clip according to claim 1, characterised in that the tooth system at the boundary edges (16, 17) of the segment (11, 12) divides the heating mat (20) into three different axial portions (21, 22, 28),
i.e. two end portions (21, 22) which, when in use, form a ring-shaped closed heating sleeve around the line pipe (10), where the wound conductors (61) extend in the shape of a partial ring from the pocket bottom or strap end at one boundary edge (16) to the strap end or pocket bottom at the opposite boundary edge (17),
and one or more staggered intermediate portion(s) (28), which form(s) a respective heating strip (23) in the region of one boundary edge (17) of the segment (11, 12) and extend(s) at least partly (44) into the protruding fillet (36),
where the wound conductors (61), although extending between the two end portions (21, 22), leave the adjoining remaining inner face (47) of the segment (11, 12) conductor-free.

3. Clip according to claim 1 or 2, characterised in that the cross-sectional thickness (35) of the wedge-shaped, curved strap (30) or fillet (36) is greater in the base region (32), which is turned towards the boundary edge (16, 17) of the segment (11, 12), than the thickness (51) of the material softening zone resulting upon heating the electrical conductor (61) in the strap (60) or in the fillet (36).

4. Clip according to one or more of claims 1 to 3, characterised in that the electrical conductor (61) is disposed at a heating-free axial spacing from the side faces of the strap (30) or fillet (36) which is greater than the thickness (51) of the material softening zone (50) upon heating.

5. Clip according to one or more of claims 1 to 4, characterised in that the heating mat (20) of a segment (11, 12) with its divided contour (26, 27) is produced from the turns (73) of a single continuous electrical conductor (61).

6. Clip according to claim 5, characterised in that the conductors (61) of the heating mats (20) of all the segments (11, 12) are electrically connected together in series and, so that they can be heated evenly together, are connected to an automatic welding machine.

7. Clip according to one or more of claims 1 to 6, characterised in that the turns (73) of the conductor (61) consist of parallel limbs (74) and intervening turning points (75),
wherein the limbs (74) extend in the cylindrical circumferential direction in the region of the two end portions (21, 22) of the heating mat (20) which produce a partial ring of the closed heating sleeve,
and extend in the cylindrical axial direction of the segment (11, 12) in the region of the heating strip (23) which is located in the intermediate portion (28) of the heating mat (20),
while the turning points (75) lie at the stepped contour line (26, 27) of the lobes (24, 28) or gaps (25, 29) of the heating mat (20).

8. Clip according to one or more of claims 1 to 7, characterised in that the electrical conductor (61) consists of a wire (63) extending in zigzag fashion in the shape of a wave line, and that the zigzag wire (63) is laid in turns (73) which produce the heating mat (20).

9. Clip according to claim 8, characterised in that the zigzag wire (63) comprises wire end pieces (64) continuing in straight fashion at its two ends which project out of the heating strand (60), which end pieces are connected to electrical contacts of the segment (11, 12).

10. Clip according to one or more of claims 1 to 9, characterised in that the steps in the contour (26, 27) of the heating mat (20) are formed at right angles.

11. Clip according to one or more of claims 1 to 10, characterised in that the segments (11, 12) comprise a radial flange (18, 19) at least at one of their two paraxial boundary edges (16, 17), and fastening means (57 to 59) act between the edge flanges of adjacent segments (11, 12) in order to form the clip embracing the line pipe (10) with radial pressure.

12. Clip according to one or more of claims 1 to 11, characterised in that the edge flange (18') of the segment (11') bears on its inner face a longitudinal rib (52) into which the paraxial heating strip (23') of the heating mat is integrated,
and that a longitudinal groove (53) of an inside width and depth which are complementary to the shape of the longitudinal rib (52) is formed into the inner flange face (69) of the opposite edge flange (19') of this segment (11') and/or of the adjacent segment (12'),
and serves to accommodate the longitudinal rib (52) when in use.

13. Clip according to one or more of claims 1 to 12, characterised in that the cross-sectional thickness of the strap (30) or fillet (36) is so small that the softened material (50) reaches the outside.

## Revendications

1. Collier ou bride en matériau soudable thermiquement, pour un tube de canalisation (10) constitué également en un matériau soudable, tel qu'un collier ou bride de réparation,
constitué d'au moins deux segments (11, 12) entourant en service le tube de canalisation (10), segments dont au moins l'un présente le cas échéant un départ tubulaire (13),
avec des arêtes de délimitation (16, 17) tournées l'une vers l'autre en service, réalisées sur le segment (11, 12) et susceptibles d'être fixées l'une à l'autre sous pression,
avec des prolongements incurvés et en forme de coin faisant saillie des arêtes de délimitation (16, 17) sur un segment et qui, en service, sont placés dans une partie en gousset réalisée entre la face intérieure du segment voisin et le tube de canalisation (10),
et avec des jaquettes chauffantes (20) constituées de conducteurs (11) susceptibles d'être chauffés électriquement, enroulés, intégrés à demeure sur les faces intérieures (14) des segments (11, 12),
caractérisé en ce que
sur chacune des deux arêtes de délimitation (16, 17) de chaque segment (11, 12), les prolongements et les éléments en gousset sont disposés les uns les autres en alternance et précisément en complémentarité vis-à-vis de ceux du segment (12, 11) chaque fois voisin et constituent une denture, formée à partir des pattes (30) ou des barrettes (36) dépassant par endroit de l'arête de délimitation (16, 17), d'une part, et
et d'autre part, à partir de poches (40, 46) en position intermédiaire, qui descendent en dessous de l'arête de délimitation (16, 17) et, en service, servent à recevoir les pattes (30) ou les barrettes (36),
en ce que les matelas chauffant (20) ont un profil de contour étagé, conforme à celui de la denture, constitué de pattes (24. 26) en saillie dans la zone des pattes (30) ou des barrettes (36) de segments, et de vides intermédiaires (29. 25) ménagés dans la zone des poches (40, 46).

2. Collier ou bride selon la revendication 1, caractérisé en ce que la denture réalisée sur les arêtes de délimitation (16, 17) du segment (11, 12) articule le matelas chauffant (20) en trois tronçons axiaux (21, 22, 28) différents,
précisément deux tronçons d'extrémité (21, 22) qui, en service, constituent une manchette chauffante fermée, à forme annulaire. placée autour du tube de canalisation (10), à l'endroit où les conducteurs (61) enroulés s'étendent en forme d'anneaux partiels depuis le fond de poche et/ou l'extrémité de patte sur une arête de délimitation (16) jusqu'à l'extrémité de patte et/ou l'extrémité de fond de poche, sur l'arête de délimitation (17) opposée,
et un ou plusieurs tronçons intermédiaires (28) décalés et qui, dans la zone d'une arête de délimitation (17) du segment (11, 12), constituent chacun une barrette chauffante (23) et s'étendent au moins partiellement (44) dans la barrette (36) en saillie,
mais en laissant sans conducteur la face intérieure résiduelle (47) limitrophe du segment (11, 12), à l'emplacement où les conducteurs (61) enroulés s'étendent précisément entre les deux tronçons d'extrémité (21, 22).

3. Collier ou bride selon la revendication 1 ou 2, caractérisé en ce que l'épaisseur de section transversale (35) de la patte (30) ou de la barrette (36) incurvée en forme de coin, dans la zone de pied (32) tournée vers l'arête de délimitation (16, 17) du segment (11, 12), est réalisée plus grande que l'épaisseur (51) de la zone d'amollissement de matériau, qui résulte du chauffage du conducteur électrique (61) dans la patte (30) et/ou dans la barrette (36).

4. Collier ou bride selon l'une ou plusieurs des revendications 1 à 3, caractérisé en ce que le conducteur électrique (61) est disposé à une distance axiale exempte de chauffage par rapport à des faces latérales de la patte (30) et/ou de la barrette (36), cette distance étant supérieure à l'épaisseur (51) de la zone d'amollissement de matériau (50) lors du chauffage.

5. Collier ou bride selon l'une ou plusieurs des revendications 1 à 4, caractérisé en ce que le matelas chauffant (20) d'un segment (11, 12) est réalisé avec son profil de contour (26, 27) articulé, à partir des enroulements (73) d'un conducteur électrique (61) continu unique.

6. Collier ou bride selon la revendication 5, caractérisé en ce que les conducteurs (61) des matelas de chauffage (20) de tous les segments (11, 12) sont branchés ensemble électriquement en série et sont raccordés à un robot de soudage, dans le but d'obtenir un chauffage commun régulier.

7. Collier ou bride selon l'une ou plusieurs des revendications 1 à 6. caractérisé en ce que les enroulements (73) du conducteur (61) sont constitués de branches (74) parallèles et de points de rebroussement (75) intermédiaires,
en ce que les branches (74) se développent dans la zone des deux tronçons d'extrémité (21, 22) en créant un anneau partiel de la manchette chauffante fermée, du matelas chauffant (20), dans la direction périphérique du cylindre,
et s'étendent dans la zone de la bande chauffante (23) se trouvant dans le tronçon intermédiaire (28) du matelas chauffant (20), dans la direction axiale du cylindre du segment (11, 12),
tandis que les points de rebroussement de direction (75) sont situés sur la ligne de profil de contour (26, 27) étagée des pattes (24, 28) ou des vides (25, 29) de la jaquette chauffante (20).

8. Collier ou bride selon l'une ou plusieurs des revendications 1 à 7, caractérisé en ce que le conducteur électrique (61) est constitué d'un fil métallique s'étendant sous la forme d'une ligne ondulée, en forme de méandre (63), et en ce que le fil métallique en méandre (63) est posé en formant des enroulements (73) qui constituent la jaquette chauffante (20).

9. Collier ou bride selon la revendication 8, caractérisé en ce que le fil métallique en méandre (63) présente, sur ses deux extrémités sortant du tronçon chauffant (60), des pièces d'extrémité de fil (64), continuant à s'étendre de façon étirée et qui sont reliés à des contacts électriques appartenant au segment (11, 12).

10. Collier ou bride selon l'une ou plusieurs des revendications 1 à 9, caractérisé en ce que les étagements ménagés dans le profil de contour (26, 27) du matelas chauffant (20) sont réalisés à angle droit.

11. Collier ou bride selon l'une ou plusieurs des revendications 1 à 10, caractérisé en ce que les segments (11, 12) présentent. sur au moins l'une de leurs deux arêtes de délimitation (16, 17) parallèles à l'axe une bride de bordure (18, 19) radiale et en ce que, entre les brides de bordure de segments (11, 12) voisins, s'engagent des moyens de fixation (57 à 59), pour constituer le collier ou bride entourant le tube de canalisation (10) en exerçant une pression radiale.

12. Collier ou bride selon l'une ou plusieurs des revendications 1 à 11, caractérisé en ce que la bride de bordure (18') du segment (11') porte sur sa face intérieure de bride une nervure longitudinale (52') dans laquelle est intégrée la barrette chauffante (23') parallèle à l'axe du matelas chauffant,
et en ce que, sur la surface intérieure de bride (69) de la bride de bordure (19') opposée de ce segment (11') et/ou du segment (12') voisin. est creusée une rainure longitudinale (53) ayant une largeur et une profondeur libres complémentaire de la forme de la nervure longitudinale (52), et qui, en service, sert à recevoir la nervure longitudinale (52).

13. Collier ou bride selon l'une ou plusieurs des revendications 1 à 12, caractérisé en ce que l'épaisseur de la section transversale de la patte (30) et/ou de la barrette (36) présente une taille suffisante pour que le matériau (56) amolli passe à l'extérieur.
